# EUROPEAN PATENT SPECIFICATION

(11) **EP 1 843 523 B1**
(45) Date of publication and mention of the grant of the patent: **22.06.2011**
(21) Application number: 06290571.6
(22) Date of filing: 03.04.2006
(51) Int. Cl.: H04W 12/06

(54) **A method of performing a location update of a mobile station to a mobile communication network, a mobile station, and a mobile communication network**
Ein Verfahren zur Durchführung einer Ortsaktualisierung einer Mobilstation in einem Mobilkommunikationsnetz, Mobilstation und Mobilkommunikationsnetz
Procédé pour effectuer une mise à jour de position d'une station mobile dans un réseau mobile de communication, station mobile et réseau mobile de communication correspondants

(43) Date of publication of application: 10.10.2007
(73) Proprietor: Alcatel Lucent, 75008 Paris (FR)
(72) Inventor: de Juan Huarte, Federico, 75014 Paris (FR); Conte, Alberto, 75014 Paris (FR)
(74) Representative: Schmidt, Werner Karl

(56) References cited:
- WO-A-2004/073325
- US-A1- 2005 250 474
- ZTE CORPORATION: "Fix for Location Update Primitive" IEEE C802.16G-06/024, [Online] 1 March 2006 (2006-03-01), pages 1-5, XP002397438 Retrieved from the Internet: URL:http://grouper.ieee.org/groups/802/16/ netman/contrib/C80216g-06_024.pdf> [retrieved on 2006-09-01]
- IEEE: "Draft IEEE Standard for Local and metropolitan area networks; Part 16: Air Interface for fixed and Mobile Broadband Wireless Access Systems - Management Plane Procedures and Services" DRAFT IEEE STANDARD FOR LOCAL METROPOLITAN AREA NETWORKS, IEEE P802.16G/D1, [Online] 30 January 2006 (2006-01-30), pages 1-95-99, XP002397439 Retrieved from the Internet: URL:http://grouper.ieee.org/groups/802/16/ pubs/80216g.html> [retrieved on 2006-09-01]

## Description

### Field of the invention

The invention relates to a method of performing location updates of a mobile station to a mobile communication network and to a mobile system and a mobile communication network.

### Background and related art

Mobile communication networks are organized in areas. An area typically consists of a cell or of a plurality of bordering cells, whereby each cell is served by one or more base stations of the mobile communication network. A mobile station, which can for example be a mobile phone, a PDA or a laptop which are connectable to the mobile communication network, performs in idle mode only one operation which is the so-called location update for which it temporarily goes out of the idle mode. In the location update operation, the mobile station sends a location update message to the mobile communication network so that the mobile communication network is able to locate the mobile station while it is in idle mode. The mobile station performs a location update each time it has changed its area. The mobile communication network emits periodically via a base station a beacon signal from which the mobile station is able to determine its area. The mobile station is required to perform a location update message if it detects a change of its area due to the received beacon signal. Moreover, the mobile station might also issue location updates in response to other triggers: for instance timeouts, i.e. long periods of time without having performed a location update.

The location update which is performed by the mobile station while it goes out of the idle mode requires not only support of paging in the mobile communication network. The location update message must be transmitted from the mobile station to the mobile communication network in a secure way in order to prevent for example eavesdropping by a third party. Security can be guaranteed at several levels: encryption guarantees confidentiality which is the highest level of security (and most resource consuming). Depending on the network policies integrity, i.e. the guarantee that the message has not been manipulated, may also be considered as an acceptable security level. The security framework by which a secured location updating message is sent from the mobile station to the mobile communication network is nowadays centered around the extended authentication protocol (EAP). The protocol consists basically of three parties, the supplicant, which is the mobile station, an authenticator which is typically an entity of the access network of the mobile communication network and the authentication server which is typically comprised in the core network of the mobile communication network. The authenticator comprises keys that are assigned to a particular mobile station and that can be used to validate the location update message sent from the mobile station. This requires however that the serving authenticator of the mobile station is identifiable for the access network in order to use the appropriate keys of the mobile station sending the location update message.

US2005/0250474 discloses a method for performing an authentication procedure according to the location registration and obtained for a mobile subscriber station. The system includes the MSS operating in idol mode to minimize power consumption, base stations for paging the plurality of MSS and a server for controlling location registration and authentication for the plurality of MSS.

ZTE Corporation: "Fix for Location Update primitive"; IEEE 802.16g-06/024; 01.03.2006; pages 1 to 5; XP002397438 describes an amendment of a protocol through the addition of new messages about the location update between the mobile station and the base station.

It is aimed for an improved method of performing a location update of a mobile station to a mobile communication network, for an improved mobile station, for an improved mobile communication network, for an improved mobile communication component and for an improved computer program product.

### Summary of the invention

In accordance with an embodiment of the invention, there is provided a method of performing a location update of a mobile station to a mobile communication network, wherein the mobile communication network comprises at least a first authenticator and a second authenticator, wherein said first authenticator relates to a first area and wherein said second authenticator relates to a second area, wherein the first authenticator being identifiable by a first authenticator identifier, and wherein the method comprises the step of receiving a location update message from the mobile station at the mobile communication network in said second area, wherein the location update message comprises the first authenticator identifier, wherein the first authenticator performed a previous authentication of the mobile station. The method further comprises the step of sending a request from said second authenticator to said first authenticator, said second authenticator requesting confirmation from the first authenticator that the mobile station has been previously authenticated as well as the confirmation that the location update message is authentic.

The first authentication identifier is now delivered with the location update message by the mobile station. By use of the first authenticator identifier, the first authenticator which is the serving authenticator for the mobile station is identifiable. In contrast, if only a single centralized authenticator is used which is then serving all mobile stations, then there would be no need for identifying the serving authenticator of the mobile station since there is only one centralized authenticator. This implementation has however the drawback that a centralized authenticator is not scalable. Scalability is however a major requirement when building a mobile communication network. The method in accordance with the invention is particularly advantageous as it allows to use more than only one authenticator and therefore enables a scalability of the mobile communication network.

The method in accordance with the invention is furthermore particularly advantageous as there is no need to maintain a location register, e.g. a database, that keeps track of each mobile station and its serving authenticator since the authenticator identifier is provided by the location update message. The maintenance of a database requires a non-negligible amount of resources and furthermore development effort.

In accordance with an embodiment of the invention, the method further comprises the step of authenticating the mobile station against the mobile communication network by the first authenticator and the step of assigning the first authenticator identifier to the mobile station. When the mobile station is contacting the mobile communication network, for example after it has been switched on, it is authenticated against the network. At this point the first authenticator is determined by the mobile communication system to be the serving authenticator for the mobile station. The first authenticator identifier by which the first authenticator is identifiable is then transmitted to the mobile station so that the mobile station can use the first authenticator identifier when sending a location update message.

In accordance with an embodiment of the invention, the first authenticator relates to a first area and a second authenticator relates to a second area, wherein the message further comprises the steps of receiving the location update message from the mobile station when it is in the second area and the step of sending a request from the second authenticator to the first authenticator, wherein the second authenticator requests confirmation from the first authenticator that the mobile station has been previously authenticated against the mobile communication network as well as confirmation that the location update message is authentic. The second authenticator is identifiable by a second authenticator identifier. When the mobile station has been authenticated previously in the first area by a first authenticator, it includes in its location update message the first authenticator identifier relating to the first authenticator. When the mobile station has been moved to the second area, it recognizes for example due to the beacon signal that it has changed its area and sends a location update message which includes the first authenticator identifier. The second authenticator requests then the first authenticator if the mobile station has already been authenticated and whether the location update message is authentic. Hence a re-authentication by the second authenticator is not required. Area can refer to the area covered by a single cell or by a plurality of adjacent cells of a cellular mobile communication network. Area can also refer to a paging area in general and to a paging area in accordance with the IEEE 802.16 standard in particular or to a location area.

In another embodiment of the invention, the first authenticator holds an access key for retrieving encryption keys of the mobile station held by said first authenticator. When the authenticator authenticates the mobile station against the mobile communication network it requests the access keys for the mobile station from the authentication server. The encryption keys are generated based on the access keys and they are used by the mobile communication network in order to decipher the encrypted location update message. The first authenticator identifier can determine from which mobile station the location update has been sent and therefore use the encryption keys of the mobile station. The first authenticator identifier must however be sent in an unencrypted way.

In accordance with an embodiment of the invention, the first authenticator identifier is comprised in the location update message in an unencrypted way.

In accordance with an embodiment of the invention, the first authenticator and the second authenticator are comprised in an access network of the mobile communication network.

In accordance with an embodiment of the invention, the mobile station is operating in an idle mode.

In accordance with an embodiment of the invention, the first authenticator requests access keys from an authentication server when the mobile station is assigned to the first authenticator. The authentication server is typically comprised in a core network of the mobile communication network. The access keys are transferred from the authenticator server to the first authenticator by use of an AAA frame. This ensures safe transfer of delicate access keys from the authentication server to the first authenticator.

In accordance with an embodiment of the invention, the extended authentication protocol (EAP) is employed for communication between the mobile station and the access network and between the access network and the core network.

In accordance with an embodiment of the invention, the mobile station is a portable device having a wireless network connection such as for example a cell phone, a portable computer, a PDA.

In accordance with an embodiment of the invention, the mobile communication network is employing the IEEE 802.16 (WIMAX) standard for communication with the mobile station.

The location update message is typically processed by a paging controller comprised in the access network. For a determination of the appropriate paging controller, the location update message comprises a paging controller ID which has been assigned to the mobile station before going to idle mode. The paging controller which has assigned its ID to the mobile station can be kept co-located with the authenticator. This implementation has however the drawback that the authenticator cannot be relocated without a re-authentication. This implies that when the mobile station moves far away, communication between the mobile station and the paging controller requires quite some architectural complexity. For instance, when the mobile station has to be woken up, the paging controller (anchored together with the authenticator) has to send a page announce message which needs to be relayed all the way from the paging controller location to the mobile station location. The method in accordance with the invention is particularly advantageous as there is no need to keep the paging controller co-located with the authenticator, since the location update message comprises a paging controller ID and an authenticator identifier so that both, the paging controller ID and the authenticator identifier, are identifiable independently.

In another aspect the invention relates to a method of performing a location update of a mobile station, e.g. a mobile phone or a terminal terminal, wherein the method comprises the steps of generating a location update message, wherein the location update message comprises a first authentication identifier, wherein the first authentication identifier relates to a first authenticator of a mobile communication network and the step of sending the location update message to the mobile communication network.

In accordance with an embodiment of the invention, the method further comprises receiving a paging signal or a paging request from the mobile communication network and thereby generating in response the location update message.

In another aspect the invention relates to a mobile station comprising means for generating a location update message, wherein the location update message comprises a first authenticator identifier, wherein the first authenticator identifier relates to a first authenticator of a mobile communication network, and means for sending the location update message.

The mobile station further comprises means for receiving a beacon or a paging request, wherein the location update message is sent in response to the received beacon or paging request, and further means for receiving the first authenticator identifier from a mobile communication network.

In another embodiment of the invention the mobile station supports the IEEE 802.16 standard and the extended authentication protocol.

In another aspect the invention relates to a mobile communication network comprising at least a first authenticator which is identifiable by a first authenticator identifier, means for receiving a location update message, wherein the location update message comprises the first authenticator identifier and means for requesting confirmation from the first authenticator that the mobile station has been previously authenticated and that the location update message is authentic.

The mobile communication network further comprises in a preferred embodiment of the invention means for authenticating the mobile station against the mobile communication network by the first authenticator and means for sending the first authenticator identifier to the mobile station.

In a preferred embodiment of the invention, the mobile communication network further comprises a second authenticator which relates to a second area, whereby the first authenticator relates to a first area, and wherein the second authenticator can request the first authenticator for validation of a location update message which has been received by the second authenticator and which comprises the first authenticator identifier.

In a preferred embodiment of the invention, the mobile communication network comprises an access network and a core network, wherein the core network comprises an authentication server.

In another embodiment of the invention the mobile communication network is employing the IEEE 802.16 standard for communication with mobile stations.

In another aspect the invention relates to a mobile communication component comprising means for receiving a location update message from a mobile station wherein the location update message comprises a first authenticator identifier, said first authenticator identifier being assigned to the mobile station in a previous authentication from a first authenticator and means for requesting confirmation from the first authenticator that the mobile station has been previously authenticated and that the message is authentic.

In another aspect the invention relates to a computer program product comprising computer executable instructions for performing a location update of a mobile station to a mobile communication network, wherein the instructions are adapted to perform the steps of receiving a location update message from the mobile station at the mobile communication network, wherein the location update message comprises a first authenticator identifier relating to a first authenticator of the mobile communication network, and wherein the first authenticator performed a previous authentication of the mobile station. The instructions further comprise the step of requesting confirmation from the first authenticator that the mobile station has been previously authenticated and that the message is authentic.

In another aspect the invention relates to a computer program product comprising computer executable instructions for performing a location update of a mobile station to a mobile communication network, wherein the instructions are adapted to perform the steps of generating a location update message, wherein the location update message comprises a first authentication identifier, wherein the first authentication identifier relates to a first authenticator of a mobile communication network and of sending the location update message to the mobile communication network.

### Brief description of the drawings

In the following preferred embodiments of the invention will be described in greater detail by way of example only making reference to the drawings in which:
- Figure 1: is a block diagram of a mobile communication network and a mobile station,
- Figure 2: is a flow diagram depicting the basic steps performed by the method in accordance with the invention,
- Figure 3: is a block diagram of a mobile communication network and a mobile station,
- Figure 4: shows a sequence of operation diagram illustrating the interactions between the various components performing the method in accordance with the invention.

### Detailed description

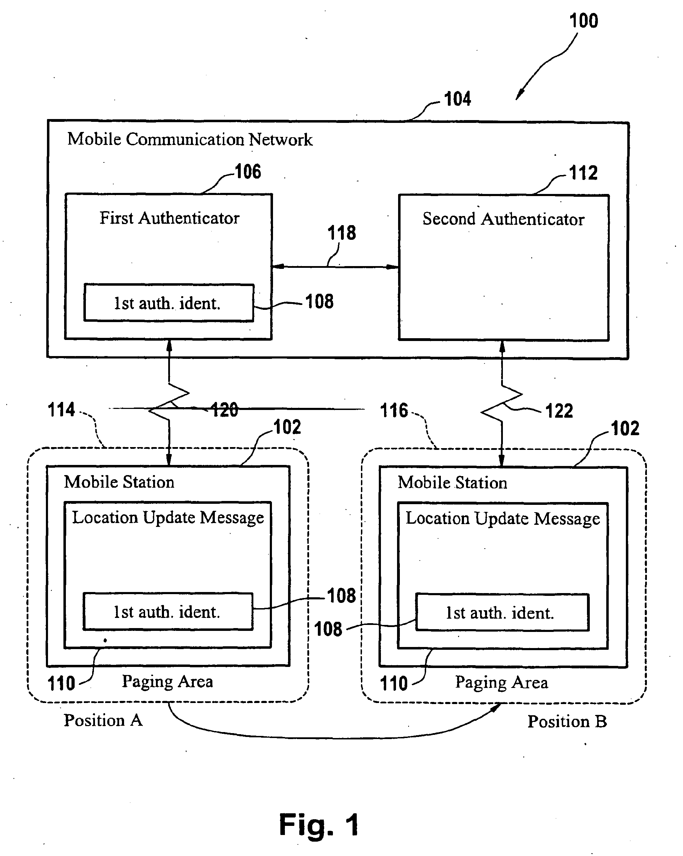

Fig. 1 shows a block diagram 100 illustrating schematically a mobile communication network 104 and a mobile station 102. The mobile station 102 can be located as shown by position A in a first area 114 or in a second area 116 as indicated by position B. The mobile communication network 104 comprises a first authenticator 106 and a second authenticator 112. The first authenticator 106 and the second authenticator 112 can communicate with each other via the communication link 118.

Assuming that the mobile station 102 is located in the area 114 it is able to communicate with the mobile communication network 104 via the communication link 120. When the mobile station 102 is located in the area 116 then it communicates with the mobile communication network 104 via the communication link 122. The communication links 120 and 122 are typically wireless communication links between the mobile station 102 and a base station which is not shown in fig. 1. From the base station the signals exchanged between the mobile station and the mobile communication network are typically processed by wired communication links.

In operation, the mobile station 102 being located in area 114 sends a location update message 110 which comprises a first authenticator identifier 108 to the mobile communication network 104. The first authenticator identifier 108 relates to the first authenticator 106. The first identifier 108 is then used to request confirmation that the mobile station 102 has been previously authenticated by the first authenticator 106 and that the message is authentic.

The first authenticator 106 typically authenticates the mobile station 102 against the mobile communication network 104 when the mobile station 102 connects from area 114 to the mobile communication network 104 for the first time, for example when it is switched on by its user, or when the lifetime of a previous authentication has timed out. Once the mobile station 102 is authenticated by the first authenticator 106 the first authenticator 106 is the serving authenticator for the mobile station 102. The first authenticator 106 assigns its first authenticator identifier 108 by which it is identifiable within the mobile communication network 104 to the mobile station 102.

When there is no traffic between the mobile station 102 and the mobile communication network 104, the mobile station 102 operates in idle mode. No traffic means that there is no active connection established between the mobile station 102 and the mobile communication network 104. The mobile station 102 listens in idle mode to a beacon signal or to a paging request that might be emitted by the mobile communication network 104. In response to the reception of a paging request the mobile station 102 wakes up, leaves the idle mode and returns to the operational mode. The beacon signal typically comprises information about the area covered by the beacon signal. When the mobile station 102 detects a beacon signal from which it notices that its area has been changed then the mobile station 102 sends a location update message 110 in response to the beacon signal which comprises the first authenticator identifier 108. This scenario for example occurs when the mobile station has been authenticated by the first authenticator 106 when it has been in the area 114. Then, after the mobile station 102 has been moved to the area 116 the mobile station 102 receives a beacon signal and notices due to the area information comprised in the beacon signal that it is not any more in the area 114 but in area 116.

Assuming that the second authenticator 112 is assigned to the area 116, the second authenticator 112 would be by default been requested to confirm the authentication of the mobile station 102. Since the location update message 110 comprises the first authenticator identifier 108 relating the first authenticator 106, the second authenticator 112 requests the first authenticator 106 via the communication link 118 if the mobile station 102 has been authenticated by the first authenticator 106 previously and if the message is authentic.

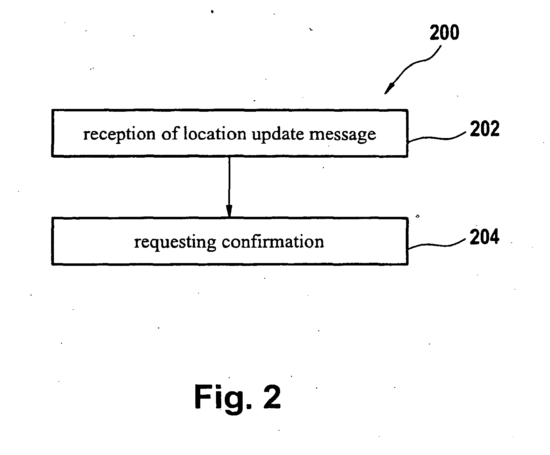

Fig. 2 shows a flow diagram 200 illustrating the basic steps performed by the method in accordance with the invention. In step 202 a location update message is received from the mobile station at the mobile communication network. The location update message comprises a first authenticator identifier which relates to a first authenticator that has been assigned the first authenticator to the mobile station in a previous authentication. In step 204 a confirmation is requested from the first authenticator that the mobile station has been previously authenticated and that the message is authentic.

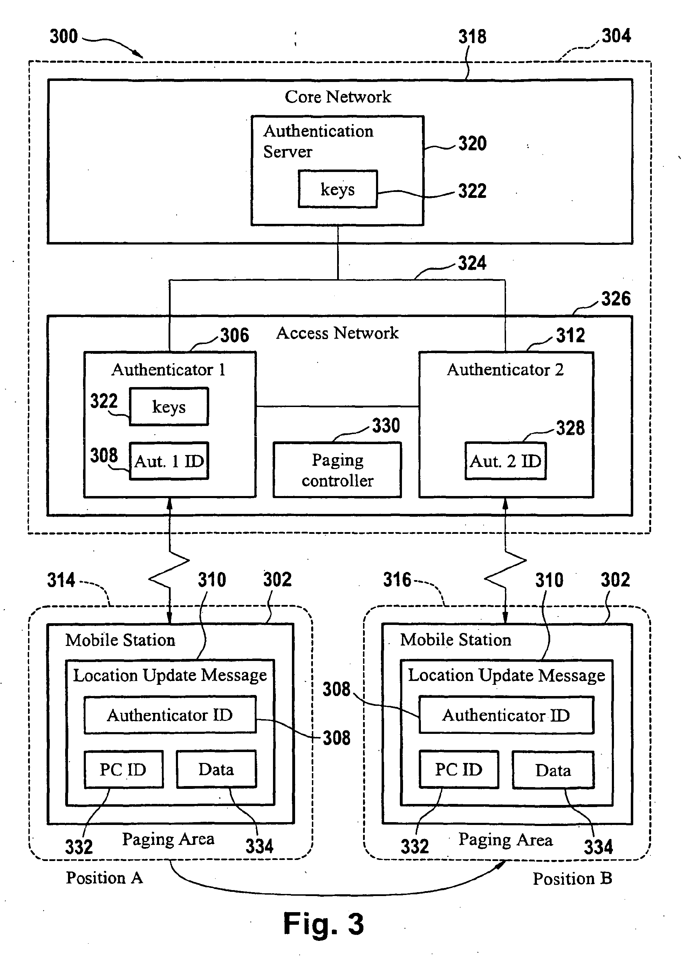

Fig. 3 shows a block diagram 300 of a mobile communication network 304 and the mobile station 302. The mobile communication network 304 consists of a core network 318 and an access network 326. The core network 318 comprises an authentication server 320. The authentication server 320 holds access keys 322 which can be employed to generate encryption keys to decipher secured messages as for example location update messages that are sent from mobile station 302.

The access network 326 comprises a first authenticator 306 and a second authenticator 312. The first authenticator 306 is identifiable by a first authenticator identifier 308 while the second authenticator 312 is identifiable by the second authenticator identifier 328. The access network 326 further comprises a paging controller 330. The mobile station 302 can be located in area 314 or in area 316 as indicated by positions A or B, respectively. The first authenticator 306 is assigned to area 314 and the second authenticator 312 is assigned to area 316.

A paging controller 330 located in the access network 326 typically controls the areas of mobile station 302. In order to identify the paging controller 330 the location update message 310 sent by the mobile station 302 for performing a location update comprises a paging controller identifier 332. This paging controller identifier 332 is given by the paging controller 330 to the mobile station 302 when the mobile station 302 is going into idle mode.

The authenticator identifier 308 is also assigned to the mobile station 302 during a first authentication of the mobile station performed by the first authenticator 306 against the mobile communication network 304. The first authenticator identifier 308 is further comprised in the location update message sent by the mobile station 302.

The location update message 310 further comprises other data 334 relating to the actual location update information. The data 334 is typically sent in an encrypted way while the first authenticator identifier 308 as well as the paging controller identifier 332 are sent in an unencrypted way.

When the first authenticator 306 authenticates the mobile station 302 against the mobile communication network 304, the authenticator requests the access keys 322 from the authentication server 320 by which encryption keys can be generated by which the data 334 comprised in the location update message 310 can be deciphered. After the reception of a location update message 310 from the mobile station 302 the first authenticator 306 can be identified due to the authenticator identifier 308 that is comprised in the location update message 310. The first authenticator can then be requested to confirm that the mobile station has been previously authenticated. Moreover, the access keys 322 and the derived encryption keys held by the first authenticator 306 can be used to decipher the data 334 comprised in the location update message 310.

When the mobile station 302 moves after it has been authenticated by the first authenticator 306 to the area 316, then the second authenticator 312 is requested to confirm the authentication of an incoming location update message 310. Due to the first authenticator identifier 308 the second authenticator 312, which is identified by the second authenticator identifier 328, requests the first authenticator 306 if the mobile station has been authenticated against the communication network 304 before and if the message is authentic.

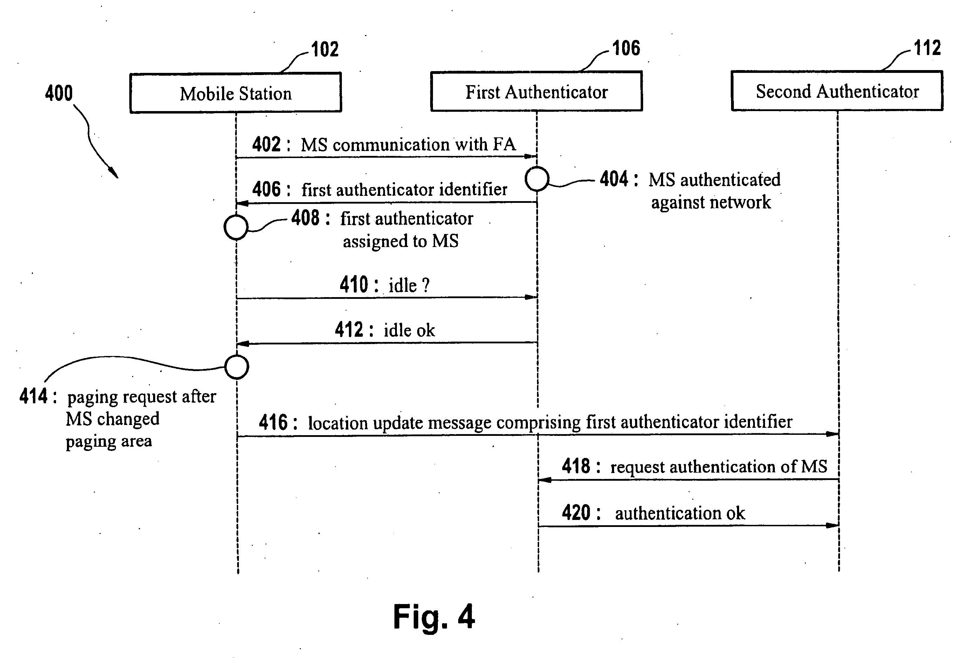

Fig. 4 shows a sequence of operation diagram 400 illustrating the basic interactions between a mobile station 102, a first authenticator 106, and a second authenticator 112. In step 402 the mobile station communicates with the first authenticator, whereby in step 404 the mobile station 402 is authenticated against the mobile communication network. In step 406, the first authenticator identifier is given to the mobile station 102, so that in step 408 the first authenticator has been assigned to the mobile station. In step 410 the mobile station requests the mobile communication network if it can go into idle mode. The mobile communication network responds in step 412 that mobile station 102 can go into idle mode. In step 414 the mobile station 102 receives a beacon signal after it has changed the area. In response it sends in step 416 a location update message comprising the first authenticator identifier. The message is received by the second authenticator 112 because the mobile station 102 has changed the area. In step 418, the second authenticator 112 requests the first authenticator 106 if the mobile station has been authenticated before by the first authenticator 106 and if the message is authentic. In step 420 the first authenticator validates the authentication if the authentication is still valid and if the message is authentic or otherwise denies the authentification of the mobile station 102.

### List of Reference Numerals

| | |
|---|---|
| 100 | Block diagram |
| 102 | mobile station |
| 104 | mobile communication network |
| 106 | First authenticator |
| 108 | First authenticator identifier |
| 110 | Location update message |
| 112 | Second authenticator |
| 114 | First area |
| 116 | Area |
| 118 | Communication link |
| 120 | Communication link |
| 122 | Communication link |
| 200 | Flow diagram |
| 202 | Step of receiving location update message |
| 204 | Step of requesting confirmation |
| 300 | Block diagram |
| 302 | Mobile station |
| 304 | Mobile communication network |
| 306 | First authenticator |
| 308 | First authenticator identifier |
| 310 | Location update message |
| 312 | Second authenticator |
| 314 | First area |
| 316 | Second area |
| 318 | Core network |
| 320 | Authentication server |
| 322 | Access keys |
| 324 | Communication link |
| 326 | Access network |
| 328 | Second authenticator ID |
| 330 | Paging controller |
| 332 | Paging controller ID |
| 334 | Data |
| 400 | Sequence of operation diagram |

## Claims

1. A method of performing a location update of a mobile station (102) to a mobile communication network (104), said mobile communication network (104) comprising at least a first authenticator (106) and a second authenticator (112), wherein said first authenticator (106) relates to a first area (114) and wherein said second authenticator (112) relates to a second area (116), said first authenticator (106) being identifiable by a first authenticator identifier (108), said method comprising:
- receiving a location update message (110) from said mobile station (102) at said mobile communication network (104) in said second area (116), said location update message (110) comprising said first authenticator identifier (108) said first authenticator (106) performed a previous authentication of said mobile station;
- sending a request from said second authenticator (112) to said first authenticator (106), said second authenticator (112) requesting confirmation from the first authenticator (106) that said mobile station (102) has been previously authenticated and that the location update message (110) is authentic.

2. The method of claim 1 further comprising:
- authenticating said mobile station (102) against said mobile communication network (104) by said first authenticator (106);
- assigning said first authenticator identifier (108) to said mobile station (102).

3. The method of claim 1, wherein the mobile communication network further comprises an authentication server (320), wherein the authentication server holds access keys (322), wherein said location update message comprises further encrypted data (334), wherein the first authenticator has requested the access keys for the mobile station from the authentication server when authenticating said mobile station, wherein the first authenticator generates encryption keys from the access keys, wherein the second authenticator requests the first authenticator to decipher the data by use of the encryption keys.

4. A mobile communication network (104) comprising:
- at least a first authenticator (106) and a second authenticator (112), said first authenticator (106) being identifiable by a first authenticator identifier (108), wherein said first authenticator (106) relates to a first area (114) and wherein said second authenticator (112) relates to a second area (116);
- means for receiving a location update message (110) from said mobile station (102) at said mobile communication network (104) in said second area (116), said location update message (110) comprising said first authenticator identifier (108), said first authenticator (106) performed a previous authentication of said mobile station;
- means for sending a request from said second authenticator (112) to said first authenticator (106), said second authenticator (112) requesting confirmation from the first authenticator (106) that said mobile station has been previously authenticated.

5. The mobile communication network of claim 4 further comprising:
- means for authenticating said mobile station (102) against said mobile communication network (104) by said first authenticator (106);
- means for sending said first authenticator identifier (108) to said mobile station (102).

6. The mobile communication network of claim 4, wherein the mobile communication network further comprises an authentication server (320), wherein the authentication server holds access keys (322), wherein said location update message comprises further encrypted data (334), wherein the first authenticator is adapted to requested the access keys for the mobile station from the authentication server when authenticating said mobile station, wherein the first authenticator is adapted to generate encryption keys from the access keys, wherein the second authenticator is adapted to request the first authenticator to decipher the data by use of the encryption keys.

7. A mobile communication component (112) of a mobile communications network, wherein the mobile communication component relates to a second area (116), wherein the mobile communications network further comprises a first authenticator (106), wherein said first authenticator (106) relates to a first area (114), wherein the mobile communication component comprises:
- means for receiving a location update message (110) from a mobile station (102), said location update message (110) comprising a first authenticator identifier (108), said first authenticator identifier (108) being assigned to said mobile station (102) in a previous authentication by the first authenticator (106);
- means for requesting confirmation from the first authenticator (106) that said mobile station (102) has been previously authenticated and that the location update message (110) is authentic.

8. The component of claim 7, wherein the mobile communication network further comprises an authentication server (320), wherein the authentication server holds access keys (322), wherein said location update message comprises further encrypted data (334), wherein the first authenticator is adapted to requested the access keys for the mobile station from the authentication server when authenticating said mobile station, wherein the first authenticator is adapted to generate encryption keys from the access keys, wherein the component further comprises means for requesting the first authenticator to decipher the data by use of the encryption keys.

9. A computer program product comprising computer executable instructions for performing a location update of a mobile station (102) to a mobile communication network (104), said computer program product being executed by a second authenticator (112) of said mobile communication network, said second authenticator relating to a second area (116) said instructions being adapted to perform the steps of:
- receiving a location update message (110) from said mobile station (102) in the second area (116) at said mobile communication network (104), said location update message (110) comprising a first authenticator identifier (108) relating to a first authenticator (106) of said mobile communication network (104), said first authenticator (106) performed a previous authentication of said mobile station (102) while the mobile station was in the first area, and wherein said first authenticator relates to a first area (114);
- sending a request from the second authenticator to the first authenticator and thereby requesting confirmation from the first authenticator (106) that said mobile station (102) has been previously authenticated and that the location update message (110) is authentic.

## Patentansprüche

1. Verfahren zur Durchführung einer Ortsaktualisierung einer Mobilstation (102) in einem Mobilkommunikationsnetz (104), wobei das besagte Mobilkommunikationsnetz (104) mindestens einen ersten Authentifikator (106) und einen zweiten Authentifikator (112) umfasst, wobei sich der besagte erste Authentifikator (106) auf einen ersten Bereich (114) bezieht, und wobei sich der besagte zweite Authentifikator (112) auf einen zweiten Bereich (116) bezieht, wobei der besagte erste Authentifikator (106) durch eine erste Authentifikator-Kennung (108) identifizierbar ist, wobei das Verfahren umfasst:
- Empfangen einer Ortsaktualisierungsnachricht (110) von der besagten Mobilstation (102) an dem besagten Mobilkommunikationsnetz (104) in dem besagten zweiten Bereich (116), wobei die besagte Ortsaktualisierungsnachricht (110) die besagte erste Authentifikator-Kennung (108) enthält, wobei der besagte erste Authentifikator (106) eine vorherige Authentifikation der besagten Mobilstation durchgeführt hat;
- Senden einer Anforderung von dem besagten zweiten Authentifikator (112) an den besagten ersten Authentifikator (106), wobei der besagte zweite Authentifikator (112) von dem ersten Authentifikator (106) die Bestätigung anfordert, dass die besagte Mobilstation (102) vorher authentifiziert worden ist, und dass die Ortsaktualisierungsnachricht (110) authentisch ist.

2. Das Verfahren nach Anspruch 1, weiterhin umfassend:
- Authentifizieren der besagten Mobilstation (102) gegenüber dem besagten Mobilkommunikationsnetz (104) durch den besagten ersten Authentifikator (106);
- Zuordnen der besagten ersten Authentifikator-Kennung (108) zu der besagten Mobilstation (102).

3. Das Verfahren nach Anspruch 1, wobei das Mobilkommunikationsnetz weiterhin einen Authentifikations-Server (320) umfasst, wobei der Authentifikations-Server Zugangsschlüssel (322) enthält, wobei die besagte Ortsaktualisierungsnachricht weitere verschlüsselte Daten (334) enthält, wobei der erste Authentifikator bei der Authentifizierung der besagten Mobilstation die Zugangsschlüssel für die Mobilstation von dem Authentifikations-Server angefordert hat, wobei der erste Authentifikator Codierschlüssel aus den Zugangsschlüsseln erzeugt, wobei der zweite Authentifikator den ersten Authentifikator auffordert, die Daten unter Verwendung der Codierschlüssel zu entschlüsseln.

4. Mobilkommunikationsnetz (104), umfassend:
- Mindestens einen ersten Authentifikator (106) und einen zweiten Authentifikator (112), wobei der besagte erste Authentifikator (106) durch eine erste Authentifikator-Kennung (108) identifizierbar ist, wobei sich der besagte erste Authentifikator (106) auf einen ersten Bereich (114) bezieht, und wobei sich der besagte zweite Authentifikator (112) auf einen zweiten Bereich (116) bezieht;
- Mittel zum Empfangen einer Ortsaktualisierungsnachricht (110) von der besagten Mobilstation (102) an dem besagten Mobilkommunikationsnetz (104) in dem besagten zweiten Bereich (116), wobei die besagte Ortsaktualisierungsnachricht (110) die besagte erste Authentifikator-Kennung (108) enthält, wobei der besagte erste Authentifikator (106) eine vorherige Authentifikation der besagten Mobilstation durchgeführt hat;
- Mittel zum Senden einer Anforderung von dem besagten zweiten Authentifikator (112) an den besagten ersten Authentifikator (106), wobei der besagte zweite Authentifikator (112) von dem ersten Authentifikator (106) die Bestätigung anfordert, dass die besagte Mobilstation (102) vorher authentifiziert worden ist.

5. Das Mobilkommunikationsnetz nach Anspruch 4, weiterhin umfassend:
- Mittel zum Authentifizieren der besagten Mobilstation (102) gegenüber dem besagten Mobilkommunikationsnetz (104) durch den besagten ersten Authentifikator (106);
- Mittel zum Senden der besagten ersten Authentifikator-Kennung (108) an die besagte Mobilstation (102).

6. Das Mobilkommunikationsnetz nach Anspruch 4, wobei das Mobilkommunikationsnetz weiterhin einen Authentifikations-Server (320) umfasst, wobei der Authentifikations-Server Zugangsschlüssel (322) enthält, wobei die besagte Ortsaktualisierungsnachricht weitere verschlüsselte Daten (334) enthält, wobei der erste Authentifikator dazu ausgelegt ist, bei der Authentifizierung der besagten Mobilstation die Zugangsschlüssel für die Mobilstation von dem Authentifikations-Server anzufordern, wobei der erste Authentifikator dazu ausgelegt ist, Codierschlüssel aus den Zugangsschlüsseln zu erzeugen, wobei der zweite Authentifikator dazu ausgelegt ist, den ersten Authentifikator aufzufordern, die Daten unter Verwendung der Codierschlüssel zu entschlüsseln.

7. Mobilkommunikationskomponente (112) eines Mobilkommunikationsnetzes, wobei sich die Mobilkommunikationskomponente auf einen zweiten Bereich (116) bezieht, wobei das Mobilkommunikationsnetz weiterhin einen ersten Authentifikator (106) umfasst, wobei sich der besagte erste Authentifikator (106) auf einen ersten Bereich (114) bezieht, wobei die Mobilkommunikationskomponente umfasst:
- Mittel zum Empfangen einer Ortsaktualisierungsnachricht (110) von einer Mobilstation (102), wobei die besagte Ortsaktualisierungsnachricht (110) eine erste Authentifikator-Kennung (108) enthält, wobei die besagte erste Authentifikator-Kennung (108) in einer vorherigen Authentifikation durch den ersten Authentifikator (106) der besagten Mobilstation (102) zugeordnet wird;
- Mittel zum Anforderung der Bestätigung von dem ersten Authentifikator (106), dass die besagte Mobilstation (102) vorher authentifiziert worden ist, und dass die Ortsaktualisierungsnachricht (110) authentisch ist.

8. Die Komponente nach Anspruch 7, wobei das Mobilkommunikationsnetz weiterhin einen Authentifikations-Server (320) umfasst, wobei der Authentifikations-Server Zugangsschlüssel (322) enthält, wobei die besagte Ortsaktualisierungsnachricht weitere verschlüsselte Daten (334) enthält, wobei der erste Authentifikator dazu ausgelegt ist, bei der Authentifizierung der besagten Mobilstation die Zugangsschlüssel für die Mobilstation von dem Authentifikations-Server anzufordern, wobei der erste Authentifikator dazu ausgelegt ist, Codierschlüssel aus den Zugangsschlüsseln zu erzeugen, wobei die Komponente weiterhin Mittel umfasst, um den ersten Authentifikator aufzufordern, die Daten unter Verwendung der Codierschlüssel zu entschlüsseln.

9. Computerprogramm-Produkt mit computerausführbaren Befehlen zum Ausführen einer Ortsaktualisierung einer Mobilstation (102) in einem Mobilkommunikationsnetz (104), wobei das Computerprogramm-Produkt von einem zweiten Authentifikator (112) des besagten Mobilkommunikationsnetzes ausgeführt wird, wobei sich der besagte zweite Authentifikator auf einen zweiten Bereich (116) bezieht, wobei die besagten Befehle dazu bestimmt sind, die folgenden Schritte auszuführen:
- Empfangen einer Ortsaktualisierungsnachricht (110) von der besagten Mobilstation (102) in dem zweiten Bereich (116) an dem besagten Mobilkommunikationsnetz (104), wobei die besagte Ortsaktualisierungsnachricht (110) eine erste Authentifikator-Kennung (108), welche sich auf einen ersten Authentifikator (106) des besagten Mobilkommunikationsnetzes (104) bezieht, enthält, wobei der besagte erste Authentifikator (106) eine vorherige Authentifikation der besagten Mobilstation (102) durchgeführt hat, während sich die Mobilstation in dem ersten Bereich aufgehalten hat, und wobei sich der besagte erste Authentifikator auf einen ersten Bereich (114) bezieht;
- Senden einer Anforderung von dem besagten zweiten Authentifikator an den ersten Authentifikator, um von dem ersten Authentifikator (106) die Bestätigung anzufordern, dass die besagte Mobilstation (102) vorher authentifiziert worden ist, und dass die Ortsaktualisierungsnachricht (110) authentisch ist.

## Revendications

1. Procédé pour effectuer une mise à jour de position d'une station mobile (102) dans un réseau de communication mobile (104), ledit réseau de communication mobile (104) comprenant au moins un premier authentifiant (106) et un deuxième authentifiant (112), dans lequel ledit premier authentifiant (106) se rapporte à une première zone (114) et dans lequel ledit deuxième authentifiant (112) se rapporte à une deuxième zone (116), ledit premier authentifiant (106) pouvant être identifié par un premier identifiant d'authentification (108), ledit procédé comprenant les étapes suivantes :
- recevoir un message de mise à jour de position (110) provenant de ladite station mobile (102) au niveau dudit réseau de communication mobile (104) dans ladite deuxième zone (116), ledit message de mise à jour de position (110) comprenant ledit premier identifiant d'authentification (108), ledit premier authentifiant (106) ayant effectué une authentification préalable de ladite station mobile ;
- envoyer une demande depuis ledit deuxième authentifiant (112) vers ledit premier authentifiant (106), ledit deuxième authentifiant (112) demandant confirmation au premier authentifiant (106) que ladite station mobile (102) a été préalablement authentifiée et que le message de mise à jour de position (110) est authentique.

2. Procédé selon la revendication 1 comprenant en outre les étapes suivantes :
- authentifier ladite station mobile (102) par rapport audit réseau de communication mobile (104) au moyen dudit premier authentifiant (106) ;
- attribuer ledit premier identifiant d'authentification (108) à ladite station mobile (102).

3. Procédé selon la revendication 1, dans lequel le réseau de communication mobile comprend en outre un serveur d'authentification (320), dans lequel le serveur d'authentification contient des clés d'accès (322), dans lequel ledit message de mise à jour de position comprend d'autres données cryptées (334), dans lequel le premier authentifiant a demandé les clés d'accès pour la station mobile au serveur d'authentification au moment d'authentifier ladite station mobile, dans lequel le premier authentifiant génère des clés de cryptage à partir des clés d'accès, dans lequel le deuxième authentifiant demande au premier authentifiant de déchiffrer les données en utilisant les clés de cryptage.

4. Réseau de communication mobile (104) comprenant :
- au moins un premier authentifiant (106) et un deuxième authentifiant (112), ledit premier authentifiant (106) pouvant être identifié par un premier identifiant d'authentification (108), dans lequel ledit premier authentifiant (106) se rapporte à une première zone (114) et dans lequel ledit deuxième authentifiant (112) se rapporte à une deuxième zone (116) ;
- moyens pour recevoir un message de mise à jour de position (110) provenant de ladite station mobile (102) au niveau dudit réseau de communication mobile (104) dans ladite deuxième zone (116), ledit message de mise à jour de position (110) comprenant ledit premier identifiant d'authentification (108), ledit premier authentifiant (106) ayant effectué une authentification préalable de ladite station mobile ;
- moyens pour envoyer une demande depuis ledit deuxième authentifiant (112) vers ledit premier authentifiant (106), ledit deuxième authentifiant (112) demandant confirmation au premier authentifiant (106) que ladite station mobile a été préalablement authentifiée.

5. Réseau de communication mobile selon la revendication 4, comprenant en outre :
- moyens pour authentifier ladite station mobile (102) par rapport audit réseau de communication mobile (104) au moyen dudit premier authentifiant (106) ;
- moyens pour envoyer ledit premier identifiant d'authentification (108) à ladite station mobile (102).

6. Réseau de communication mobile selon la revendication 4, dans lequel le réseau de communication mobile comprend en outre un serveur d'authentification (320), dans lequel le serveur d'authentification contient des clés d'accès (322), dans lequel ledit message de mise à jour de position comprend d'autres données cryptées (334), dans lequel le premier authentifiant est adapté pour demander les clés d'accès pour la station mobile au serveur d'authentification au moment d'authentifier ladite station mobile, dans lequel le premier authentifiant est adapté pour générer des clés de cryptage à partir des clés d'accès, dans lequel le deuxième authentifiant est adapté pour demander au premier authentifiant de déchiffrer les données en utilisant les clés de cryptage.

7. Composant de communication mobile (112) d'un réseau de communication mobile, dans lequel le composant de communication mobile se rapporte à une deuxième zone (116), dans lequel le réseau de communication mobile comprend en outre un premier authentifiant (106), dans lequel ledit premier authentifiant (106) se rapporte à une première zone (114), dans lequel le composant de communication mobile comprend :
- moyens pour recevoir un message de mise à jour de position (110) provenant d'une station mobile (102), ledit message de mise à jour de position (110) comprenant un premier identifiant d'authentification (108), ledit premier identifiant d'authentification (108) étant attribué à ladite station mobile (102) dans une authentification préalable par le premier authentifiant (106) ;
- moyens pour demander confirmation au premier authentifiant (106) que ladite station mobile (102) a été préalablement authentifiée et que le message de mise à jour de position (110) est authentique.

8. Composant selon la revendication 7, dans lequel le réseau de communication mobile comprend en outre un serveur d'authentification (320), dans lequel le serveur d'authentification contient des clés d'accès (322), dans lequel ledit message de mise à jour de position comprend d'autres données cryptées (334), dans lequel le premier authentifiant est adapté pour demander les clés d'accès pour la station mobile au serveur d'authentification au moment d'authentifier ladite station mobile, dans lequel le premier authentifiant est adapté pour générer des clés de cryptage à partir des clés d'accès, dans lequel le composant comprend en outre des moyens pour demander au premier authentifiant de déchiffrer les données en utilisant les clés de cryptage.

9. Produit de programme informatique comprenant des instructions exécutables par ordinateur pour effectuer une mise à jour de position d'une station mobile (102) dans un réseau de communication mobile (104), ledit produit de programme informatique étant exécuté par un deuxième authentifiant (112) dudit réseau de communication mobile, ledit deuxième authentifiant se rapportant à une deuxième zone (116), lesdites instructions étant adaptées pour effectuer les étapes suivantes :
- recevoir un message de mise à jour de position (110) provenant de ladite station mobile (102) dans la deuxième zone (116) au niveau dudit réseau de communication mobile (104), ledit message de mise à jour de position (110) comprenant un premier identifiant d'authentification (108) se rapportant à un premier authentifiant (106) dudit réseau de communication mobile (104), ledit premier authentifiant (106) ayant effectué une authentification préalable de ladite station mobile (102) alors que la station mobile était dans la première zone, et dans lequel ledit premier authentifiant se rapporte à une première zone (114) ;
- envoyer une demande depuis le deuxième authentifiant vers le premier authentifiant et demander ainsi confirmation au premier authentifiant (106) que ladite station mobile (102) a été préalablement authentifiée et que le message de mise à jour de position (110) est authentique.
